# EUROPEAN PATENT SPECIFICATION

(11) **EP 3 303 656 B1**
(45) Date of publication and mention of the grant of the patent: **27.01.2021**
(21) Application number: 16802615.1
(22) Date of filing: 03.06.2016
(51) Int. Cl.: C23F 13/18, B66C 1/42, B66C 1/62, F16L 58/00, C23F 13/20, F16B 2/10, F16B 2/18, B63B 17/00, E02B 17/00, F16M 13/02

(54) **ANODE CLAMP ASSEMBLY AND USE OF SUCH ASSEMBLY**
ANODENKLEMMANORDNUNG UND VERWENDUNG SOLCH EINER ANORDNUNG
ENSEMBLE DE PINCES D'ANODE ET SON UTILISATION

(30) Priority: 04.06.2015 DK 201570348
(43) Date of publication of application: 11.04.2018
(73) Proprietor: SubC Partner A/S, 6700 Esbjerg (DK)
(72) Inventor: WIGANT, Lars, 6852 Billum (DK)
(74) Representative: Nielsen, Leif
(86) International application number: PCT/DK2016/050161
(87) International publication number: WO 2016/192736

(56) References cited:
- WO-A1-2015/055884
- CN-U- 202 072 399
- CN-U- 202 785 277
- CN-U- 203 159 715
- CN-U- 203 159 715
- CN-U- 203 998 627
- CN-U- 204 224 097
- DE-B- 1 115 204
- FR-A1- 2 676 723
- GB-A- 2 500 656
- US-A- 4 705 331
- US-A- 4 705 331
- US-A1- 2004 191 026

## Description

### Field of the Invention

The present invention relates to an anode clamp assembly for attachment to a submerged structure which is to be corrosion protected and comprising:
- an elongate bar shaped or cylindrical anode arranged on a rod having rod ends extending from each end of the anode,
- clamps being attached to the rod ends wherein
- each clamp comprises two first legs having an intermediate bore arranged for rotation around a first rotation axis,
- each of said first legs at a first end is provided with a gripping jaw.

Furthermore, the present invention relates to the use of such assembly.

### Background of the Invention

Galvanic or sacrificial anodes are widely used for cathodic corrosion protection of underwater structures. Such sacrificial anodes create the galvanic current which protects the submerged structure and are designed to corrode sacrificially. They accordingly must be properly electrically connected to the structure. Anodes are sacrificed and have to be added during the lifetime of the structure to ensure integrity.

Adding new anodes is done by divers or during yard stays. Typically, this is effected by removing the existing anode and replace the anode with a new.

For some underwater structures anodes could also be installed by submersibles or remotely operated vehicles. Divers, submersibles, such as manned submarines, or sophisticated remotely controlled robotic submersibles are extremely expensive to operate, and this is particularly true as the depth increases. The latter systems use robotic arms and even a diver has less than normal dexterity, particularly in a diving suit at significant depth. Such restraints also make many tools or power tools difficult to use.

A clamp for a submersible anode is disclosed in US 5,902,463. This clamp comprises a structure based on C-shaped end plates connected to the anode and cooperating with a clamping bolt which is urged against the structure from a position at the other side of the center of the structure. The construction is not easy to operate as more actions (swinging of end plates and tightening of the clamping bolt) are needed for the attachment of the anode.

Furthermore a clamp of the type mentioned by way of introduction is disclosed in US 4,705,331. This clamp comprises two legs equipped with teeth for ensuring a tight grip around the subsea structure to be protected. There is neither a disclosure of a clamp being intended for attachment to a part connected to the structure to be protected nor a clamp that can be installed offshore by use of Remote Operated Vehicle. Accordingly there exist needs for anodes which are easy to apply to the underwater structure and which could be placed by use of a Remote Operated Vehicle.

### Object of the Invention

It is an objective of the invention to provide a general improvement in the art. Especially, it is an objective to provide an anode clamp assembly which is easy to use and is suitable for being attached to a submerged structure by means of a Remote Operated Vehicle having a simple construction.

### Description of the Invention

This object is obtained with an anode clamp assembly according to claim 1.

The new solution is an anode with an integrated clamp that can be attached to the existing anodes at its steel bar or tube. The attachment ensures structural connection and electrical connection.

The advantage of the solution is that it can be installed offshore by use of Remote Operated Vehicle.

This minimizes the cost because yard staying is avoided.

The level of safety is higher because use of divers is avoided.

A special tool associate to a Remote Operated Vehicle may be used to attach the new clamp to the steel bar or tubes which are used for supporting an existing anode to the submerged structure. With the construction of the over-centre acting knee joint being symmetrical around a plane containing the first rotation axis and the third rotation axis make it possible to exert a force which is arranged in the symmetry plane and being perpendicular to the rotation axis in order to active or deactivate the locking of the clamp.

There is no need for movement in other directions in order to establish the electrical and structural connection between the new anode and the existing steel at the old anode.

Accordingly, the tool used for the connection need only to have one movement in one direction. This could e.g. be effected through a hydraulic piston.

According to the invention a stop is provided at a first of the second legs in form of an end portion extending past the second hinge in direction against the first rotation axis.

With such embodiment a simple construction is established in that one of the second legs have an extension which is used as a stop in order to establish the correct force when the clamp is activated. It is possible that such stop could be provided at a first and a second of the second legs. However, it is sufficient to provide a stop only at a first of the second legs.

Seeing that the end portion of the second leg is provided with an extension passing the second hinge in direction against the first rotation axis the stop could cooperation with a bushing or material surrounding the intermediate bore arranged in the two first legs. This will provide an especially technical simple solution to obtaining a correct structural and electrical connection.

According to a further embodiment said first of the second legs is L-formed and that said stop is provided by the short part of the L-formed leg.

With an L-form of the second leg the stop would be constituted of the short part of the L-formed leg. The long part of the L-formed leg would substantially correspond to the second of the second legs.

Moreover, it is beneficial that the first of the second legs could be T-formed. In this situation the beam of the T would at one side be the stop, and at the other side a hole could be provided for attaching a tool used to activate and deactivate the locking of the clamp.

According to a further embodiment said rod is a hollow tube being closed in both ends.

If the rod passing through the anode is hollow and closed it is possible to control the buoyancy of the new anode and the two attached anode clamps. Hereby it is possible to have a reduction of the power to be used by the Remote Operated Vehicle in order to attach the new anode to a submerged structure.

According to a further embodiment said first legs comprise two leg parts being arranged under an angle being between 15 and 45° and wherein said bore is arranged at the connection between the two leg parts.

When the two leg parts of the first leg are angled in relation to another it is possible to have the leg parts at the first end which is provided with the gripping jaw arranged substantially parallel in the gripping position. This will ensure that the leg parts would be within the area of the anodes. This reduces the risk that the leg parts might interfere with other items at the submerged structure which is arranged near to the existing anode. Such interference with other parts on the submerged structure may cause a risk for correct structural and electrical connection.

Simultaneously such angle could also ensure that the two first legs substantially would create a Y-form. Here the second legs could be arranged between the upper braches of the Y. This would also contribute to reduce the size of the clamps.

According to a further embodiment the anode is of aluminum and said rod is of steel.

Such construction is normal, seeing that steel is necessary in order to establish a strong and secure connection between the new anodes and the existing steel at the old anode. Normally the anode would be of aluminum. However, other material could also be used for the anode.

According to a further embodiment the first and second legs are made of metal plates, preferable steel.

When the legs are made of metal plates they are simple to manufacture. The plates could be interconnected through shafts passing through holes in the metal plates.

Steel is preferred material for the first and second legs; however, other suitable metals could also be used. Also other materials than metal could be used; however, such materials should also be conductive.

According to a further embodiment at least some of the legs are made of superposed metal plates between which the other legs made from one metal plate are arranged.

When some of the legs are made of two plates arranged with a mutual distance then the remainder of the legs could be made of metal plates arranged in the interspace superposed plates. Such construction is rather simple and will provide a strong clamp.

According to a further embodiment the clamp in the locked condition establish electrical and structural connection at the jaws and at the bores in the first legs.

The electrical and structural connection would be established with the grip of the jaws when the clamp is locked. When the clamp is locked then a force would be exerted also on the rod ends being in contact with the bores due to the pressure exerted by the stop. Accordingly, electrical and structural connection is also established to the metal rod and thereby also to the new anode.

With the present invention an efficient method of attaching a new anode clamp to a submerged structure is possible. When using an assembly according to the present invention the gripping jaws are connected to a rod or a metal bar acting as a support for an existing anode and which rod has an end extending from each end of the exiting anode. The existing anode would normally be secure to the submerged structure to be protected against corrosion either by welding or bolting or other attachment means. Accordingly, a secure connection to the supporting rod on the existing anode would establish a secure attachment for establishing electrical and structural connection between the new anode and the submerged structure.

### Description of the Drawing

The invention will be explained in more detail with reference to the accompanying drawings, where
- Fig. 1: is a principle sketch of an anode clamp assembly according to the present invention,
- Fig. 2: illustrates a detail of the anode clamp assembly according to Fig. 1 seen in one direction,
- Fig. 3: illustrates the detail as shown in Fig. 2 however, from another direction,
- Fig. 4: illustrates the detail of Fig. 2 and 3, however, from a third direction,
- Fig. 5: illustrates a partial view of a jack-up leg/spud-can with anodes attached,
- Fig. 6: illustrates different types of anodes casted around supporting steel bars, and
- Fig. 7: illustrates typical anodes casted around tube for the support of the anode.

### Detailed Description of the Invention

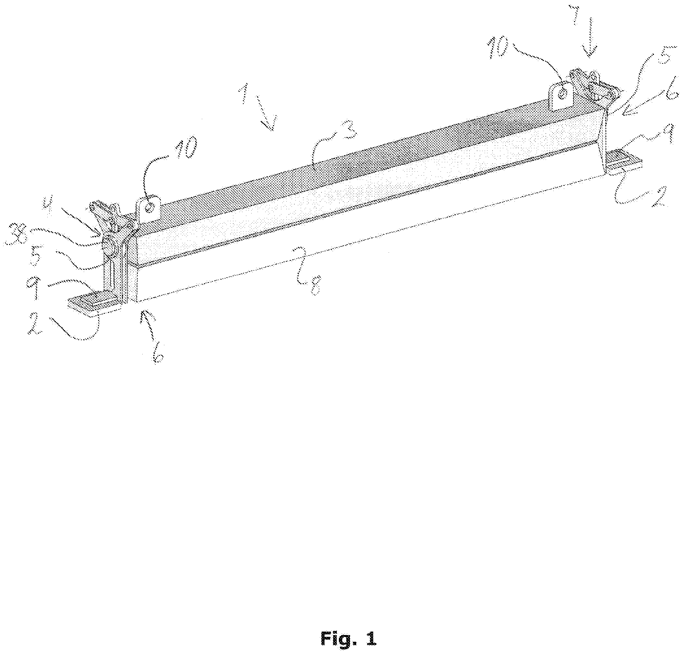

Fig. 1 illustrates an anode clamp assembly 1 according to the present invention which is intended for attachment to a submerged structure 2 which is to be corrosion protected.

The anode clamp assembly 1 comprises an elongate bar shaped anode 3 arranged on a rod 4 having rod ends 5 extending from each end 6 of the anode 3 and being closed by an end cover 38. Clamps 7 are attached to the rod ends 5.

In Fig. 1 the anode 3 is a new anode to be attached. An existing anode 8 is illustrated. The existing anode has a steel bar 9 arranged with protruding end parts at each end of the anode 8, which steel bar 9 is used for the connection to the structure 2. In the present situation the attachment is established through welding. However, alternatively the steel bar 9 could be attached by bolting. The existing anode 8 is casted around the steel bar 9.

The anode 3 is provided with eyelets 10 which are intended for handling the anode with suitable tools for transport and attachment.

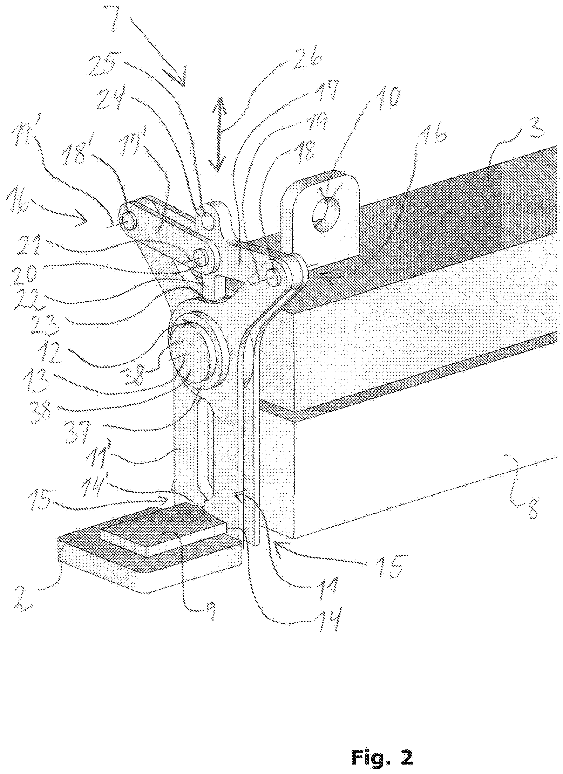

Fig. 2-4 more clearly illustrates the structure of the clamp 7.

As seen in Fig. 2 each clamp comprises two first legs 11,11'. Each of the clamps has an intermediate bore 12 arranged in an intermediate position between the ends of the legs 11,11'. The intermediate bore 12 is arranged for rotation around a first rotation axis 13 which is defined by the rod ends 5. A locking disc 37 is secured to the rod end 5 in order to maintain the two first legs 11,11' in their position. The locking disc 37 could be secured by any suitable means including welding.

Each of the first legs 11,11' is provided with a gripping jaw 14,14' for attachment to the steel bar 9. The gripping jaws 14,14' are arranged at a first end 15 of the first legs. At the second end 16 of the first legs second legs 17,17' are connected through a hinge 18,18'. Each of the hinges 18,18' has a second rotation axis 19,19'. The second legs 17,17' are hinged to each other through a hinge 20 which defines a third rotation axis 21. This construction forms an over-centre acting knee joint.

The first rotation axis 13 and the third rotation axis 21 are arranged in a common plane which extend in the vertical plane as seen in Fig. 2 and extend in the elongate direction of the anode 3. This common plane would also be a symmetry plane for the clamp 7.

The first 17 of the second legs are provided with a T-form. At one branch of the T an extension 22 is provided which constitutes a stop which is arranged in contact with the material 23 surrounding the bores 12. The other branch 24 of the beam of T-formed leg extends upwardly and is provided with a hole 25. This hole is intended for cooperation with the tool for activating and deactivating the clamp 7. As indicated with the double arrow 26 the force to be used for activating or deactivating the clamp 7 is extending in one direction. As a device for activating and deactivating the clamp could be a hydraulic cylinder (not shown) which is attached to the hole 25 and connected with a Remote Operated Vehicle which is also supporting the anode 3 through a grip in the eyelets 10.

It is noted that the leg 17 need only to have the L-form and that other construction could be used for activating or deactivating the clamp.

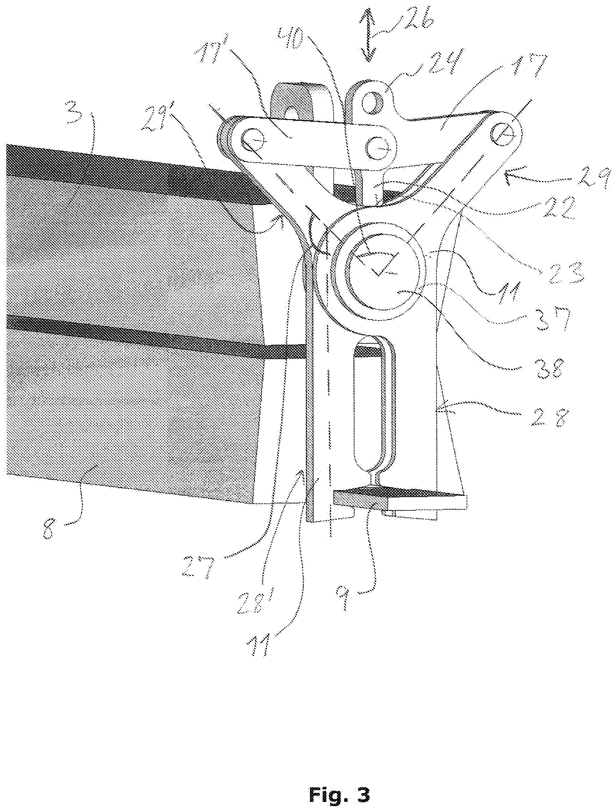

As seen more clearly in Fig. 3 the first legs 11,11' comprise two leg parts 28,29; 28',29' being arranged under an angle 27 being between 15 and 45°. The bore 12 is arranged between the two leg parts. The two first leg parts 28,28' are arranged substantially parallel within the cross sections covered by anodes 3,8. The second leg parts 29,29' are arranged under a mutual angle 40 and between these two leg parts 29,29' the second legs 17,17' are arranged.

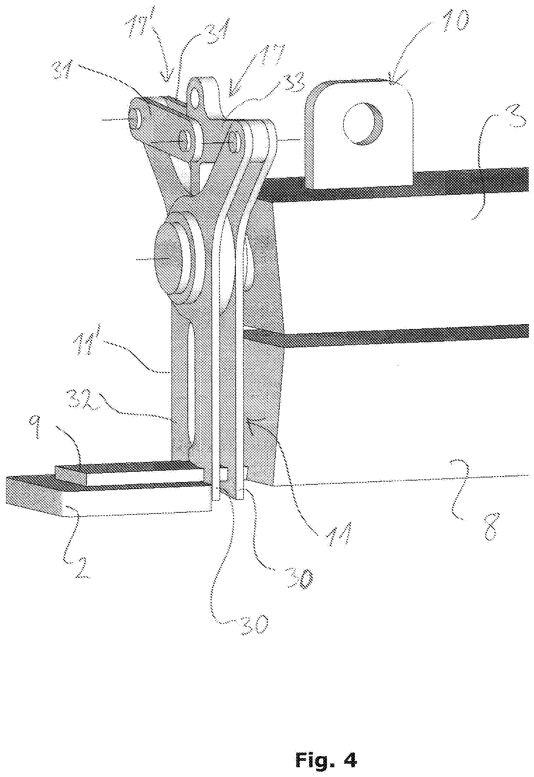

From Fig. 4 it occurs that the first leg 11 is made of two superposed metal plates 30 and it also occurs that the second leg 17' is made of two superposed metal plates 31. Furthermore, it occurs that the first leg 11' is made of one single metal plate 32, and that the second leg 17 is made of one single metal plate 33. Accordingly, the legs could be connected with each other in the manner illustrated in Fig. 4 and thereby have a rather limited extension.

The anode 3 is of aluminium and the rod is made of steel.

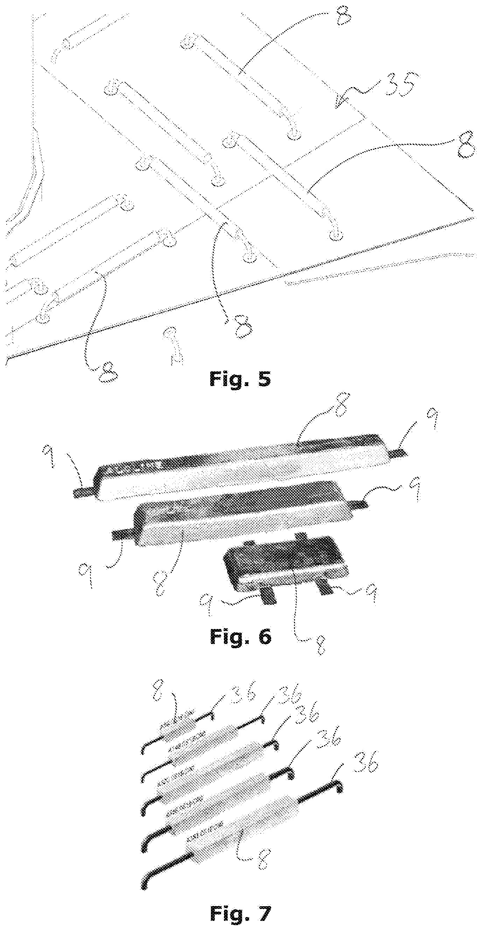

Fig. 5 illustrates a partial view of a jack-up leg 35 being provided with anodes 8.

Figs. 6 and 7 illustrate different types of anodes. It occurs that the anodes are made of aluminium casted around a steel bar 9 or a tube 36. The steel bar or tube acts as a support for the anode 8 and it is typically attached to a structure by welding or bolting.

Other forms of the anodes are possible.

## Claims

1. Anode clamp assembly (1) for attachment to a submerged structure (2) which is to be corrosion protected and comprising:
- an elongate bar shaped or cylindrical anode (3) arranged on a rod (4) having rod ends (5) extending from each end (6) of the anode (3),
- clamps (7) being attached to the rod ends (5), wherein
- each clamp (7) comprises two first legs (11, 11') having an intermediate bore (12) arranged for rotation around a first rotation axis (13),
- each of said first legs (11, 11') at a first end (15) is provided with a gripping jaw (14), **characterised in that**
- said gripping jaw (14) is intended for attachment to a part connected to the structure (2), and
- each of said first legs (11, 11') at a second end (16) is hinged connected to a second leg (17, 17') via first hinges (18, 18') having a second rotation axis (19, 19'), and
- the second legs (17, 17') are hinged to each other via a second hinge (20) having a third rotation axis (21) for forming an over-centre acting knee joint together with the two first legs (11, 11'), and
- said first rotation axis (13) is defined by the rod ends (5), and
- said first rotation axis (13) and said third rotation axis (21) are arranged in a common plane being a symmetry plane for the clamp (7), and wherein a stop is provided at a first (17) of the second legs in form of an end portion extending past the second hinge (20) in direction against the first rotation axis (13) to establish the correct force when the clamp (7) is activated by a force pushing the over-centre acting knee joint towards the first hinges (18, 18').

2. Assembly (1) according to claim 1, wherein said first (17) of the second legs is L-formed and that said stop is provided by the short part of the L-formed leg.

3. Assembly (1) according to any preceding claim, wherein said rod (4) is a hollow tube being closed in both ends (5).

4. Assembly (1) according to any preceding claim, wherein said first legs (11, 11') comprise two leg parts (28, 29, 28', 29') being arranged under an angle being between 15 and 45° and wherein said bore (12) is arranged at the connection between the two leg parts (28, 29, 28', 29').

5. Assembly (1) according to any preceding claim, wherein the anode (3) is of aluminum and said rod (4) is of steel.

6. Assembly (1) according to any preceding claim, wherein the first and second legs (11, 11', 17, 17') are made of metal plates (30, 31), preferable steel.

7. Assembly (1) according to claim 6, wherein at least some of the legs (11, 11', 17, 17') are made of superposed metal plates (30, 31) between which the other legs (11, 11', 17, 17') made from one metal plate (30, 31) are arranged.

8. Assembly (1) according to any preceding claim, wherein the clamp (7) in the locked condition establish electrical and structural connection at the jaws (14, 14') and at the bores (12) in the first legs (11, 11').

9. Use of an assembly (1) according to any preceding claim, **characterised in that** the gripping jaws (14, 14') are connected to a rod (4) acting as support for an anode (3) and having rod ends (5) extending from each end of the anode (8) and acting as support for the anode (3) and being attached to the structure (2).

## Patentansprüche

1. Anodenklemmanordnung (1) zur Befestigung an einer untergetauchten Struktur (2), die korrosionsgeschützt werden soll, und Folgendes umfassend:
- eine längliche stabförmige oder zylindrische Anode (3), die auf einer Stange (4) angeordnet ist, die Stangenenden (5) aufweist, die sich aus jedem Ende (6) der Anode (3) erstrecken,
- Klemmen (7), die an den Stangenenden (5) befestigt sind, wobei
- jede Klemme (7) zwei erste Schenkel (11, 11') umfasst, die eine Zwischenbohrung (12) aufweisen und die zur Drehung um eine erste Rotationsachse (13) angeordnet sind,
- jeder aus den ersten Schenkeln (11, 11') an einem ersten Ende (15) mit einer Klemmbacke (14) versehen ist,
**dadurch gekennzeichnet, dass**
- die Klemmbacke (14) zur Befestigung an einem Teil, das mit der Struktur (2) verbunden ist, bestimmt ist, und
- jeder der ersten Schenkel (11, 11') an einem zweiten Ende (16) mit einem zweiten Schenkel (17, 17') über erste Scharniere (18, 18'), die eine zweite Rotationsachse (19, 19') aufweisen, gelenkig verbunden ist, und
- die zweiten Schenkel (17, 17') miteinander über ein zweites Scharnier (20), das eine dritte Rotationsachse (21) aufweist, gelenkig verbunden sind, um ein Schnappkniegelenk zusammen mit den zwei ersten Schenkeln (11, 11') zu bilden, und
- wobei die erste Rotationsachse (13) durch die Stangenenden (5) definiert ist, und
- die erste Rotationsachse (13) und die dritte Rotationsachse (21) in einer gemeinsamen Ebene angeordnet sind, die eine Symmetrieebene für die Klemme (7) ist, und wobei ein Anschlag an einem ersten (17) der zweiten Schenkel in Form eines Endabschnitts bereitgestellt ist, der sich über das zweite Scharnier (20) in einer Richtung gegen die erste Rotationsachse (13) erstreckt, um die korrekte Kraft herzustellen, wenn die Klemme (7) durch eine Kraft aktiviert wird, die das Schnappkniegelenk zu den ersten Scharnieren (18, 18') hin drückt.

2. Anordnung (1) nach Anspruch 1, wobei der erste (17) der zweiten Schenkel L-förmig ist und der Anschlag durch den kurzen Teil des L-förmigen Schenkels bereitgestellt wird.

3. Anordnung (1) nach einem der vorstehenden Ansprüche, wobei die Stange (4) ein hohles Rohr ist, das an beiden Enden (5) geschlossen ist.

4. Anordnung (1) nach einem der vorstehenden Ansprüche, wobei die ersten Schenkel (11, 11') zwei Schenkelteile (28, 29, 28', 29') umfassen, die in einem Winkel angeordnet sind, der zwischen 15 und 45° liegt, und wobei die Bohrung (12) an der Verbindung zwischen den zwei Schenkelteilen (28, 29, 28', 29') angeordnet ist.

5. Anordnung (1) nach einem der vorstehenden Ansprüche, wobei die Anode (3) aus Aluminium ist und die Stange (4) aus Stahl ist.

6. Anordnung (1) nach einem der vorstehenden Ansprüche, wobei die ersten und die zweiten Schenkel (11, 11', 17, 17') aus Metallplatten (30, 31) hergestellt sind, vorzugsweise aus Stahl.

7. Anordnung (1) nach Anspruch 6, wobei mindestens manche der Schenkel (11, 11', 17, 17') aus übereinanderliegenden Metallplatten (30, 31) hergestellt sind, zwischen denen die anderen Schenkel (11, 11', 17, 17'), die aus einer Metallplatte (30, 31) hergestellt sind, angeordnet sind.

8. Anordnung (1) nach einem der vorstehenden Ansprüche, wobei die Klemme (7) im verriegelten Zustand eine elektrische und konstruktive Verbindung an den Backen (14, 14') und an den Bohrungen (12) in den ersten Schenkeln (11, 11') herstellt.

9. Verwendung einer Anordnung (1) nach einem der vorstehenden Ansprüche, **dadurch gekennzeichnet, dass** die Klemmbacken (14, 14') mit einer Stange (4) verbunden sind, die als Stütze für eine Anode (3) fungiert und die Stangenenden (5) aufweist, die sich von jedem Ende der Anode (8) erstrecken und als Stütze für die Anode (3) fungieren und an der Struktur (2) befestigt sind.

## Revendications

1. Ensemble de pinces d'anode (1) pour fixation à une structure immergée (2) qui doit être protégée contre la corrosion et comprenant :
- une anode (3) cylindrique ou en forme de barre allongée agencée sur une tige (4) ayant des extrémités de tige (5) s'étendant à partir de chaque extrémité (6) de l'anode (3),
- des pinces (7) fixées aux extrémités de tige (5), dans lequel
- chaque pince (7) comprend deux premières pattes (11, 11') ayant un alésage intermédiaire (12) agencé à des fins de rotation autour d'un premier axe de rotation (13),
- chacune desdites premières pattes (11, 11') à une première extrémité (15) est pourvue d'une mâchoire de préhension (14), **caractérisé en ce que**
- ladite mâchoire de préhension (14) est destinée à être fixée à une partie reliée à la structure (2), et
- chacune desdites premières pattes (11, 11') à une seconde extrémité (16) est reliée de manière articulée à une seconde patte (17, 17') via des premières articulations (18, 18') ayant un deuxième axe de rotation (19, 19'), et
- les secondes pattes (17, 17') sont articulées l'une par rapport à l'autre via une seconde articulation (20) ayant un troisième axe de rotation (21) pour former un joint à rotule à action hypercentrique conjointement avec les deux premières pattes (11, 11'), et
- ledit premier axe de rotation (13) est défini par les extrémités de tige (5), et
- ledit premier axe de rotation (13) et ledit troisième axe de rotation (21) sont agencés dans un plan commun qui est un plan de symétrie pour la pince (7), et dans lequel une butée est fournie au niveau d'une première (17) des secondes pattes sous la forme d'une partie d'extrémité s'étendant au-delà de la seconde articulation (20) dans une direction contre le premier axe de rotation (13) pour établir la force correcte quand la pince (7) est activée par une force poussant le joint à rotule à action hypercentrique vers les premières articulations (18, 18').

2. Ensemble (1) selon la revendication 1, dans lequel ladite première (17) des secondes pattes est en forme de L et ladite butée est fournie par la partie courte de la patte en forme de L.

3. Ensemble (1) selon une quelconque revendication précédente, dans lequel ladite tige (4) est un tube creux fermé aux deux extrémités (5).

4. Ensemble (1) selon une quelconque revendication précédente, dans lequel lesdites premières pattes (11, 11') comprennent deux parties de patte (28, 29, 28', 29') agencées sous un angle entre 15 et 45° et dans lequel ledit alésage (12) est agencé au niveau de la connexion entre les deux parties de patte (28, 29, 28', 29').

5. Ensemble (1) selon une quelconque revendication précédente, dans lequel l'anode (3) est en aluminium et ladite tige (4) est en acier.

6. Ensemble (1) selon une quelconque revendication précédente, dans lequel les première et seconde pattes (11, 11', 17, 17') sont faites de plaques métalliques (30, 31), de préférence en acier.

7. Ensemble (1) selon la revendication 6, dans lequel au moins certaines des pattes (11, 11', 17, 17') sont faites de plaques métalliques (30, 31) superposées entre lesquelles les autres pattes (11, 11', 17, 17') faites d'une plaque métallique (30, 31) sont agencées.

8. Ensemble (1) selon une quelconque revendication précédente, dans lequel la pince (7) dans l'état verrouillé établit une connexion électrique et structurelle au niveau des mâchoires (14, 14') et au niveau des alésages (12) dans les premières pattes (11, 11').

9. Utilisation d'un ensemble (1) selon une quelconque revendication précédente, **caractérisé en ce que** les mâchoires de préhension (14, 14') sont reliées à une tige (4) jouant le rôle de support pour une anode (3) et ayant des extrémités de tige (5) s'étendant à partir de chaque extrémité de l'anode (8) et jouant le rôle de support pour l'anode (3) et étant fixées à la structure (2).
